# EUROPEAN PATENT APPLICATION

(11) **EP 1 394 202 A2**
(43) Date of publication of application: **03.03.2004**
(21) Application number: 03019174.6
(22) Date of filing: 25.08.2003
(51) Int. Cl.: C08L 23/08, C08L 9/00, B24B 37/04, B24D 3/28

(54) **Composition for polishing pad and polishing pad therewith**

(30) Priority: 26.08.2002 JP 2002245829; 26.08.2002 JP 2002245830
(71) Applicant: JSR Corporation, Tokyo (JP)
(72) Inventor: Hosaka, Yukio, Tokyo (JP); Okamoto, Takahiro, Tokyo (JP); Hasegawa, Kou, Tokyo (JP); Kawahashi, Nobuo, Tokyo (JP); Morino, Katsuaki, Tokyo (JP)
(74) Representative: Leson, Thomas Johannes Alois, Dipl.-Ing.

(57) **Abstract**

An objective of the present invention is to provide a composition for polishing pad that is excellent in formability. abrasion resistance and small in temperature dependence of Young's modulus and a polishing pad therewith. The composition for polishing pad of the present invention comprises a water-insoluble matrix and a water-soluble particle dispersed in the water-insoluble matrix. The water-insoluble matrix contains a crosslinked ethylene-vinyl acetate copolymer and/or a crosslinked 1,2-polybutadiene and each of these is contained by a prescribed amount against the total of the water-insoluble matrix.

## Description

### BACKGROUND OF THE INVENTION

### FIELD OF THE INVENTION

The present invention relates to a composition for polishing pad and a polishing pad therewith. In more detail, the invention relates to a composition for polishing pad that is excellent in formability, abrasion resistance and small in temperature dependence of Young's modulus, and a polishing pad therewith. The present polishing pad is widely used in the production of semiconductor devices and is particularly preferable for the chemical mechanical polishing of a surface of a semiconductor wafer and the like.

### DESCRIPTION OF THE PRIOR ART

In recent years, the Chemical Mechanical Polishing (CMP) is attracting attention as a method of forming a flat surface for a substrate such as a wafer. In the CMP, a surface of a material to be polished is polished by sliding a polishing pad and the surface to be polished while supplying a slurry that is an aqueous dispersion in which abrasive is dispersed onto a surface of the polishing pad, and retaining the slurry supplied in holes (hereinafter referred to as "pore") opened on the surface of the polishing pad during sliding.

The present inventors had found that a polishing pad made of a composition comprising a crosslinked polymer is excellent in polishing performance. The technique is disclosed in JP-A 2001-334455. Other techniques concerning the polishing pad are disclosed in JP-T H8-500622, JP-A 2000-34416, JP-A 2000-33552, JP-A 2000-34416 and the like. However, a polishing pad improved in various kinds of performances is required.

### SUMMARY OF THE INVENTION

The present invention intends to overcome the existing problem considering the situation described above, and the objective is to provide a composition for polishing pad that is excellent in formability, abrasion resistance and small in temperature dependence of Young's modulus, and a polishing pad therewith.

The present invention is described as follows.

The first aspect of the present invention is a composition for polishing pad comprising a water-insoluble matrix and a water-soluble particle dispersed in the water-insoluble matrix, wherein the water-insoluble matrix contains a crosslinked ethylene-vinyl acetate copolymer and does not contain crosslinked 1,2-polybutadiene; and a content of the crosslinked ethylene-vinyl acetate copolymer is 10 % by weight or more based on 100 % by weight of the total of the water-insoluble matrix.

The second aspect of the present invention is a composition for polishing pad obtained by subjecting a crosslinkable polymer composition comprising an uncrosslinked water-insoluble polymer and a water-soluble particle to a crosslinking treatment, wherein the uncrosslinked water-insoluble polymer contains uncrosslinked ethylene-vinyl acetate copolymer and does not contain uncrosslinked 1,2-polybutadiene; a content of the uncrosslinked ethylene-vinyl acetate copolymer is 10 % by weight or more based on 100 % by weight of the total of a material to be a water-insoluble matrix; and at least one part of the uncrosslinked ethylene-vinyl acetate copolymer is crosslinked by the crosslinking treatment.

The third aspect of the present invention is a composition for polishing pad comprising a water-insoluble matrix and a water-soluble particle dispersed in the water-insoluble matrix, wherein the water-insoluble matrix contains crosslinked 1,2-polybutadiene and other crosslinked polymer except for crosslinked ethylene-vinyl acetate copolymer; and a content of the crosslinked 1,2-polybutadiene is 10 % by weight or more based on 100 % by weight of the total of the water-insoluble matrix.

The fourth aspect of the present invention is a composition for polishing pad obtained by subjecting a crosslinkable polymer composition comprising an uncrosslinked water-insoluble polymer and a water-soluble particle to a crosslinking treatment, wherein the uncrosslinked water-insoluble polymer contains uncrosslinked 1,2-polybutadiene and other crosslinkable polymer except for uncrosslinked ethylene-vinyl acetate copolymer; a content of the uncrosslinked 1,2-polybutadiene is 10 % by weight or more based on 100 % by weight of the total of a material to be a water-insoluble matrix; and at least one part of the uncrosslinked 1,2-polybutadiene is crosslinked by the crosslinking treatment.

The fifth aspect of the present invention is a composition for polishing pad comprising a water-insoluble matrix and a water-soluble particle dispersed in the water-insoluble matrix, wherein the water-insoluble matrix contains crosslinked ethylene-vinyl acetate copolymer and crosslinked 1,2-polybutadiene; and a content of the crosslinked ethylene-vinyl acetate copolymer or the crosslinked 1,2-polybutadiene is 10 % by weight or more based on 100 % by weight of the total of the water-insoluble matrix.

The sixth aspect of the present invention is a composition for polishing pad obtained by subjecting a crosslinkable polymer composition comprising an uncrosslinked water-insoluble polymer and a water-soluble particle to a crosslinking treatment, wherein the uncrosslinked water-insoluble polymer contains uncrosslinked ethylene-vinyl acetate copolymer and uncrosslinked ethylene-vinyl acetate copolymer; a content of the uncrosslinked 1,2-polybutadiene or the uncrosslinked 1,2-polybutadiene is 10 % by weight or more based on 100 % by weight of the total of a material to be a water-insoluble matrix; and at least one part of the uncrosslinked ethylene-vinyl acetate copolymer and the uncrosslinked 1,2-polybutadiene is crosslinked by the crosslinking treatment.

In addition, the polishing pad of the present invention is characterized in that it comprises a polishing part made of the above-mentioned composition for polishing pad.

The composition for polishing pad the present invention is excellent in formability and abrasion resistance, and accordingly a polishing pad made of the composition has such performance stably.

In the case a variation of Young's modulus between 0 and 80 degree centigrade is 1000 MPa or less, excessive softening of the polishing pad due to generation of frictional heat during polishing can be suppressed from occurring.

In addition, the polishing pad of the present invention is excellent in abrasion resistance and small in temperature dependence of Young's modulus, and accordingly a polishing state can be easily controlled, and stable polishing characteristics can be exhibited over a long time period.

### DETAILED DESCRIPTION OF THE INVENTION

In the following, the present invention will be detailed.

### [A] Composition for a polishing pad

In the invention, the term "water-insoluble matrix" means a polymer portion that constitutes the composition for polishing pad, and furthermore, a matrix phase that constitutes a polishing part constituting a polishing pad or an entire polishing pad described below.

The first aspect of the present invention is a composition for polishing pad comprising a water-insoluble matrix and a water-soluble particle dispersed in the water-insoluble matrix, and the water-insoluble matrix contains a crosslinked ethylene-vinyl acetate copolymer (hereinafter, simply referred to as "crosslinked EVA" in some cases) and does not contain crosslinked 1,2-polybutadiene (hereinafter, simply referred to as "crosslinked PBD" in some cases); and a content of the crosslinked ethylene-vinyl acetate copolymer is 10 % by weight or more based on 100 % by weight of the total of the water-insoluble matrix. The composition is explained in [1] below.

### [1] Composition for polishing pad that contains crosslinked EVA but not crosslinked PBD

The water-insoluble matrix containing crosslinked EVA where copolymer (EVA) of ethylene and vinyl acetate was crosslinked leads to a composition for polishing pad excellent in (1) formability. The "formability" has a meaning of easiness to form and handling property. In some cases, an uncrosslinked polymer composition containing a water-soluble particle is charged into a metal mold and crosslinked by a crosslinking agent or the like, and thereafter a resultant molded body (composition for polishing pad) is demolded from the metal mold. At the time of demolding, the molded body comprising crosslinked EVA can be assuredly suppressed from breaking or being chipped. In addition, when crosslinked EVA is contained in the water-insoluble matrix, (2) a resultant composition for polishing pad is excellent in abrasion resistance. As a result, a polishing pad having a longer lifetime can be obtained.

Furthermore, when crosslinked EVA is used in the water-insoluble matrix, (3) temperature dependence of Young's modulus of the composition for polishing pad can be reduced. In particular, since the Young's modulus is improved so as to vary slowly with temperature, the Young's modulus can be suppressed from rapidly changing in a specific temperature range. The reduced temperature dependence of the Young's modulus does not make the water-insoluble matrix softened excessively and a removal rate lowered due to temperature-rise during polishing, even in the case of a polishing part using the composition. By a mild variation of the Young's modulus against temperature, a state of the softening can be expected. Accordingly, excellent polishing performance from the beginning of the polishing can be easily maintained, resulting in stable polishing.

Still furthermore, when crosslinked EVA is used in the water-insoluble matrix, (4) the composition for polishing pad is endowed with an elastic recovering force, and a displacement due to the shearing-stress applied on the polishing part (polishing pad) during polishing can be suppressed small. Therefore, burial of pores and collapsing fluff in a short time due to a plastic deformation by an excess stretching of the polishing part (polishing pad) during polishing and dressing can be prevented. That is, an excellent polishing can be proceeded and maintained for a longer time period, and a pore can be efficiently formed during dressing. In addition, a surface of the polishing part (polishing pad) can be suppressed from excessively fluffing owing to the dressing, and a flatness of the polishing surface of a material to be polished is not disturbed.

A content of crosslinked EVA is 10 % by weight or more, preferably 15 % by weight or more, more preferably 20 % by weight or more and particularly preferably 30 % by weight or more based on 100 % by weight of the total of the water-insoluble matrix. An entirety of the water-insoluble matrix may be made of crosslinked EVA (that is, crosslinked EVA is 100 % by weight.). When the content of crosslinked EVA is less than 10 % by weight, the above effects (1) to (4) may not be sufficiently exhibited.

A content of vinyl acetate unit in EVA to be crosslinked is not particularly limited and is generally 3 % by weight or more, preferably 5 to 30 % by weight, more preferably 10 to 30 % by weight. When the content of vinyl acetate unit is less than 3 % by weight, the effect of reducing temperature dependence of the Young's modulus of the composition for polishing pad cannot be sufficiently obtained. On the other hand, when the content of the vinyl acetate unit exceeds 50 % by weight, an over-crosslinking tends to be caused, resulting in difficulty in retaining sufficient toughness in some cases.

Crosslinked EVA may be one that is crosslinked according to whatever methods. That is, it may be one that is chemically crosslinked with an organic peroxide, sulfur, a sulfur compound and the like, or one that is crosslinked by heating, or one that is crosslinked by irradiating an electron beam. Furthermore, it may be one that is crosslinked according to two or more kinds of the above crosslinking methods.

The water-insoluble matrix may further contain, other than crosslinked EVA, other polymer except for crosslinked PBD. As the other polymer, a thermoplastic resin, an elastomer, a rubber, a curable resin (resin that is cured by heat, light and the like such as a thermosetting resin and a photosetting resin) can be cited. These can be used alone or in combination of two or more.

As the thermoplastic resin, a polyolefinic resin except for EVA such as polyethylene, an ABS-based resin such as acrylonitrile-styrene-butadiene copolymer, a polystyrene-based resin, a polyacrylic resin such as (meth)acrylic resin, a vinyl ester-based resin except for EVA, a saturated polyester-based resin, a polyamide-based resin, a fluorinated resin such as polyvinylidene fluoride, a polycarbonate-based resin, a polyacetal-based resin and the like can be cited.

As the elastomer, a polyolefinic elastomer except for EVA, a styrene-based elastomer such as styrene-butadiene-styrene copolymer, a hydrogenated block copolymer thereof (SEBS), a thermoplastic polyurethane-based elastomer, a thermoplastic polyester-based elastomer, a polyamide-based elastomer, a silicone resin-based elastomer, a fluorinated resin-based elastomer and the like can be cited.

As the rubber, a conjugated diene-based rubber such as butadiene-based rubber (high cis-butadiene rubbers, low cis-butadiene rubbers and the like), an isoprene-based rubber, a styrene-butadiene-based rubber, a styrene-isoprene-based rubber, a nitrile-based rubber such as acrylonitrile-butadiene-based rubber, an acrylic rubber, an ethylene-α-olefin-based rubber such as an ethylene-propylene-based rubber, ethylene-propylene-diene-based rubber, a butyl rubber, a silicone rubber, a fluorinated rubber and the like can be cited.

As the curable resin, an urethane-based resin, an epoxy-based resin, a (meth)acrylic resin, an unsaturated polyester-based resin, a polyurethane-urea-based resin, an urea-based resin, a silicone-based resin, a phenolic resin and the like can be cited.

The polymers cited above can be used alone or in combination of two or more.

Among the polymers cited above, an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester-based resin, a saturated polyester-based resin, a polyamide-based resin and a polyacetal-based resin are preferable. These polymers are less in softening due to water absorption and stable to acids or alkalis contained in the slurry.

The other polymer may be an uncrosslinked polymer or a crosslinked polymer. In addition, when the other polymer is a crosslinked polymer, the polymer may be one that is crosslinked according to whatever methods and may be one that is co-crosslinked with EVA or may not be co-crosslinked therewith.

Furthermore, the other polymer may be a polymer modified by an acid anhydride group, a carboxyl group, a hydroxyl group, an epoxy group, an amino group and the like. The modified polymer may be used alone or in combination of two or more. According to the modification, an affinity with crosslinked EVA, a water-soluble particle or a slurry can be controlled.

When the other polymer is contained in the water-insoluble matrix, a content of the polymer is preferably 90 % by weight or less, more preferably 80 % by weight or less and further preferably 50 % by weight or less based on 100 % by weight of the total of the water-insoluble matrix.

The "water-soluble particle" is a particle that drops off from the water-insoluble matrix when the polishing part (polishing pad) comes into contact with the slurry that is an aqueous dispersion, and the water-soluble particle is dispersed in the water insoluble matrix. The dropping-off of the water-soluble particle leads to forming a pore on a surface of the polishing part (polishing pad). The dropping-off of the water-soluble particle may be caused by dissolving when the water-soluble particle comes into contact with water or the like contained in the slurry, or by swelling and becoming gel-like when the water-soluble particle contains water and the like. Furthermore, the dissolution or the swelling may be caused not only by contact with water but also with an aqueous mixture medium containing an alcoholic solvent such as methanol.

The water-soluble particle has, other than the effect of forming a pore, another effect of making the indentation hardness of the polishing part (polishing pad) larger and thereby making an amount of indentation of the material to be polished due to the depression smaller. That is, the composition for polishing pad containing a water-soluble particle makes Shore D hardness preferably 35 or more, more preferably in the range of from 50 to 90 and further preferably from 60 to 85, but usually 100 or less. When the Shore D hardness is 35 or more, a pressure that can be applied on the material to be polished can be made larger, and accompanying this, the removal rate can be improved. In further addition to this, the high polishing flatness can be obtained. Accordingly, the water-soluble particle is particularly preferable to be solid body that can secure a sufficient indentation hardness of the polishing part (polishing pad).

A material that constitutes the water-soluble particle is not particularly limited. And an organic water-soluble particle and an inorganic water-soluble particle can be cited. As the organic water-soluble particle, one that is made of a saccharide (polysaccharide such as cyclodextrin, dextrin and starch, lactose, mannite and the like), a cellulose (hydroxypropyl cellulose, methyl cellulose and the like), a protein, polyvinyl alcohol, polyvinyl pyrrolidone, polyacrylic acid and its salt, polyethylene oxide, a water-soluble photosensitive resin, sulfonated polyisoprene, sulfonated polyisoprene copolymer and the like can be cited. In addition, as the inorganic water-soluble particle, one made of potassium acetate, potassium nitrate, potassium carbonate, potassium hydrogen carbonate, potassium chloride, potassium bromide, potassium phosphate, magnesium nitrate and the like can be cited. The material constituting the water-soluble particle may be used alone or in combination of two or more. Furthermore, the water-soluble particle may be one kind of a water-soluble particle made of a predetermined material or two or more kinds of water-soluble particles made of different materials.

An average particle diameter of the water-soluble particle is preferably in the range of from 0.1 to 500 µm, more preferably from 0.5 to 100 µm and further preferably from 1 to 50 µm. Therefore, a magnitude of the pores is preferably in the range of from 0.1 to 500 µm, more preferably from 0.5 to 100 µm and further preferably from 1 to 50 µm. When the average particle diameter of the water-soluble particle is less than 0.1 µm, the magnitude of the formed pore becomes smaller than that of the abrasive contained in the slurry used, and accordingly, the slurry used may not be retained in the pore. On the other hand, when the average particle diameter exceeds 500 µm, the magnitude of the pore to be formed becomes excessively large; as a result, a mechanical strength of the composition for polishing pad and a removal rate by the polishing part (polishing pad) obtained tend to reduce.

A content of the water-soluble particle is 0.1 to 90 % by volume, more preferably 0.5 to 60 % by volume and further preferably 1 to 40 % by volume based on 100 % by volume of the total of the water-insoluble matrix and the water-soluble particle. When the content of the water-soluble particle is less than 0-1 % by volume, a pore may not be sufficiently formed on the polishing part (polishing pad) obtained cannot be not be sufficient, and the removal rate tends to reduce. On the other hand, when the water-soluble particle is contained exceeding 90 % by volume, it tends to be difficult to sufficiently inhibit the water-soluble particle present within the polishing part (polishing pad) from swelling or dissolving, and accordingly, it becomes difficult to maintain the hardness and the mechanical strength of the polishing part (polishing pad) at proper values.

It is preferable that the water-soluble particle is dissolved in water only when exposed on a surface layer of the polishing part (polishing pad), and is not moisture-absorbed and further not swollen within the polishing part (polishing pad). Accordingly, at least part of the outermost part of the water-soluble particle may be provided with an outer shell that can suppress the moisture absorption. The outer shell may be physically absorbed by the water-soluble particle, or may form a chemical bond with the water-soluble particle, or may come into contact with the water-soluble particle through both of the above. As a material that constitutes such outer shell, polypeptide, epoxy resin, polyimide, polyamide, polysilicate and the like can be cited. The outer shell, even when only part of the water-soluble particle is provided therewith, can exhibit sufficiently the effect.

The composition for polishing pad of the invention may contain a compatibilizing agent in order to control affinity with the water-soluble particle or dispersibility of the water-soluble particle in the water-insoluble matrix. As the compatibilizing agents, a polymer modified by an acid anhydride group, a carboxyl group, a hydroxyl group, an epoxy group, an oxazoline group, an amino group and the like, a block copolymer, a random copolymer, and furthermore various kinds of a nonionic surfactant, a coupling agent and the like can be cited.

Furthermore, the composition for polishing pad of the invention may contain one kind or two or more kinds of an abrasive, an oxidizer, a hydroxide of alkali metal, an acid, a salt that generates an acid in using, a pH controller, a surfactant, an anti-scratch agent and the like that have been so far contained. Thereby, by supplying water alone, the polishing can be carried out.

As the abrasive, particles made of silica, alumina, ceria, zirconia, titania and the like can be cited. One kind or two or more kinds of these can be used.

As the oxidizer, hydrogen peroxide, peracetic acid, perbenzoic acid, an organic peroxide such as tert-butyl hydroperoxide, a permanganate such as potassium permanganate, a dichromate such as potassium dichromate, a halogen acid compound such as potassium iodate, a nitrate such as nitric acid and iron nitrate, a perhalogen acid compound such as perchloric acid, a persulfate such as ammonium persulfate, heteropolyacids and the like can be cited. Among these oxidizers, other than hydrogen peroxide and an organic peroxide whose decomposition products are not harmful, a persulfate such as ammonium persulfate is particularly preferable. One kind or two or more kinds thereof can be used.

As the hydroxide of alkali metal, sodium hydroxide, potassium hydroxide, rubidium hydroxide, cesium hydroxide and the like can be cited. One kind or two or more kinds of these can be used.

As the acid, an organic acid and an inorganic acid can be cited. Among these, as the organic acid, p-toluene sulfonic acid, dodecyl-benzene sulfonic acid, isoprene sulfonic acid, gluconic acid, lactic acid, citric acid, tartaric acid, malic acid, glycolic acid, malonic acid, formic acid, oxalic acid, succinic acid, fumaric acid, maleic acid, phthalic acid and the like can be cited. Furthermore, as the inorganic acid, nitric acid, hydrochloric acid, sulfuric acid and the like can be cited. One kind or two or more kinds of these can be used.

As the salt, an ammonium salt, an alkali metal salt such as a sodium salt and a potassium salt, and an alkali earth metal salt such as a calcium salt and a magnesium salt of the above acids can be cited. One kind or two or more kinds of these can be used.

As the surfactant, a cationic surfactant, an anionic surfactant and a nonionic surfactant may be used. As the cationic surfactant, an aliphatic amine salt, an aliphatic ammonium salt and the like are cited. As the anionic surfactant, a carboxylate such as fatty acid soap and alkyl ether carboxylate, a sulfonate such as alkyl benzene sulfonate, alkyl naphthalene sulfonate and a-olefin sulfonate, a sulfuric ester salt such as sulfuric ester salt of higher alcohol, an alkyl ether sulfate, a polyoxyethylene alkylphenyl ether sulfate, and a phosphoric ester salt such as alkyl phosphoric ester salt and the like are cited. In addition, as the nonionic surfactant, an ether type surfactant such as polyoxyethylene alkylether, an ether-ester type surfactant such as polyoxyethylene ether of glycerol, an ester type surfactant such as polyethylene glycol fatty acid ester, glycerol ester and sorbitan ester and the like are cited. One kind or two or more kinds of these can be used.

As the anti-scratch agent, bisphenol, bipyridyl, 2-vinylpyridine, 4- vinylpyridine, salicylaldoxime, o-phenylenediamine, m-phenylenediamine, catechol, o-aminophenol, thiourea, N-alkyl group-containing (meth)acrylamide, N-aminoalkyl group-containing (meth)acrylamide, 7-hydroxy-5-methyl-1,3,4-triazaindolizine, 5-methyl-lH-benzotriazole. phthalazine, melamine, 3-amino-5,6-dimethyl-1,2,4-triazine and the like are cited. One kind or two or more kinds of these can be used.

Furthermore, the composition for polishing pad of the invention may contain, other than the compatibilizing agent and the various kinds of materials that have been so far contained in the slurry, an additive such as a filler, a softener, an anti-oxidizer, a UV-absorber, an anti-static agent, a lubricant and a plasticizer. As a material constituting the filler, a material that can improve the rigidity such as calcium carbonate, magnesium carbonate, talc and clay, and a material that has a polishing effect such as silica, alumina, ceria, zirconia, titanium oxide, manganese dioxide, manganic oxide and barium carbonate are cited.

The producing method of the composition [1] for polishing pad is not particularly limited. For instance, predetermined materials comprising an organic material containing an crosslinkable polymer that will form each corresponding crosslinked polymer, an additive and the like are kneaded and crosslinked by use of a kneading machine or the like. As the kneading machine, one that has been known can be used. For instance, the kneading machine such as a roll, a kneader, Banbury mixer, an extruder (single shaft, multi-shaft) and the like are cited. In order to allow easily working at kneading, those materials are usually heated and kneaded. At the heated temperature, the water-soluble particle is preferably solid. When the water-soluble particle is solid, irrespective of a magnitude of the compatibility with the crosslinkable polymer, the water-soluble particle can be well-dispersed with the above-mentioned preferable average particle diameter. Accordingly, it is preferable to select a kind of the water-soluble particle in accordance with a working temperature of the crosslinkable polymer to be used.

According to the composition [1] for polishing pad, a variation of Young's modulus between 0 and 80 degree centigrade can be suppressed to 1000 MPa or less, further to 800 MPa or less and particularly to 600 MPa or less. Thereby, excessive softening of the polishing part (polishing pad) due to generation of frictional heat by sliding during polishing and dressing can be suppressed from occurring.

In addition, between 20 and 50 degree centigrade, a variation of Young's modulus in a temperature difference of 10 degree centigrade can be suppressed to 500 MPa or less, further to 400 MPa or less and particularly to 200 MPa or less. Thereby, since the Young's modulus becomes to vary more moderately, polishing can be easily controlled while expecting the softening state due to temperature.

The Young's modulus is a value measured with a viscoelastometer capable of measuring Young's modulus at a tensile mode under conditions of initial load of 100 g, maximum strain of 0.01 % and frequency of 0.2 Hz.

The second aspect of the present invention is a composition for polishing pad obtained by subjecting a crosslinkable polymer composition comprising an uncrosslinked water-insoluble polymer and a water-soluble particle to a crosslinking treatment, wherein the uncrosslinked water-insoluble polymer contains uncrosslinked ethylene-vinyl acetate copolymer and does not contain uncrosslinked 1,2-polybutadiene; a content of the uncrosslinked ethylene-vinyl acetate copolymer is 10 % by weight or more based on 100 % by weight of the total of a material to be a water-insoluble matrix; and at least one part of the uncrosslinked ethylene-vinyl acetate copolymer is crosslinked by the crosslinking treatment. In the present invention, the term "material to be a water-insoluble matrix" includes a polymer containing an uncrosslinked polymer, a crosslinking agent described below and the like. The composition is explained in [2] below.

### [2] Composition for polishing pad obtained from a crosslinkable polymer composition that contains uncrosslinked ethylene-vinyl acetate copolymer but not uncrosslinked 1,2-polybutadiene

The "uncrosslinked water-insoluble polymer" forms a water-insoluble matrix by a crosslinking treatment, and the water-insoluble matrix becomes a matrix phase that constitutes a polishing part constituting a polishing pad or an entire polishing pad. The crosslinkable polymer composition contains 10 % by weight or more of uncrosslinked ethylene-vinyl acetate copolymer (hereinafter simply referred to as "uncrosslinked EVA") based on 100 % by weight of the total of the material to be a water-insoluble matrix, but it does not contain uncrosslinked 1,2-polybutadiene (hereinafter simply referred to as "uncrosslinked PBD"). Uncrosslinked EVA is at least partially crosslinked when the crosslinkable polymer composition for polishing pad is crosslinked. A crosslinked portion of uncrosslinked EVA becomes crosslinked EVA in [1] above. Accordingly, an obtained polishing part (polishing pad) has an excellent formability and abrasion resistance, and temperature dependence of Young's modulus can be reduced. Since the Young's modulus is improved so as to vary slowly with temperature, the composition for polishing pad is endowed with an elastic recovering force.

A content of uncrosslinked EVA in the crosslinkable polymer composition is 10 % by weight or more, preferably 15 % by weight or more, more preferably 20 % by weight or more and particularly preferably 30 % by weight or more based on 100 % by weight of the total of the material to be a water-insoluble matrix. An entirety of the uncrosslinked water-insoluble polymer may be comprised of uncrosslinked EVA (that is, uncrosslinked EVA is 100 % by weight.). When the content of uncrosslinked EVA is less than 10 % by weight, the above effects after crosslinking treatment may not be sufficiently exhibited.

In addition, a content of vinyl acetate units of uncrosslinked EVA may be the same as EVA in [1] above.

The crosslinkable polymer composition may contain other crosslinkable polymer except for uncrosslinked PBD. As the other crosslinkable polymer, uncrosslinked ones of such as various kinds of thermoplastic resins, elastomers, rubbers and thermosetting resins cited in [1] above can be used alone or in combinations thereof. Among these, corresponding uncrosslinked ones of an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester resin, a saturated polyester-based resin, a polyamide-based resin and a polyacetal-based resin are preferable. When these polymers are crosslinked, they become corresponding crosslinked polymers or crosslinked copolymers. The crosslinked polymers exhibit effects as described in [1] above. In the case the other crosslinkable polymer is used, an amount thereof to be charged into the crosslinkable polymer composition is preferably 85 % by weight or less and more preferably 50 % by weight or less based on 100 % by weight of the total of the material to be a water-insoluble matrix.

The crosslinkable polymer composition for polishing pad contains a water-soluble particle.

The water-soluble particle may be used as explained in [1] above.

Furthermore, the crosslinkable polymer composition for polishing pad may contain a compatibilizing agent cited in [1] above, and a component and an additive that have been so far added to the slurry.

The "crosslinking treatment" is applied to the crosslinkable polymer composition for polishing pad, and thereby uncrosslinked EVA contained in the uncrosslinked water-insoluble polymer constituting the crosslinkable polymer composition for polishing pad is at least partially crosslinked. A content of crosslinked EVA formed owing to this crosslinking treatment can be 10 % by weight or more based on 100 % by weight of the total of the water-insoluble matrix after crosslinking. In addition, a crosslinking degree of crosslinked EVA can be 5 % or more, more preferably 10 % or more and particularly preferably 15 % or more. The crosslinking degree may be 100 %.

Furthermore, a crosslinking method is not particularly limited, and by use of the kneading machine that is explained in [1] above, a uncrosslinked water-insoluble polymer and various kinds of additives containing a crosslinking agent described below are altogether or dividedly charged, and thereto the chemical crosslinking by use of the crosslinking agent such as an organic peroxide, a sulfur, a sulfur compound or the like, the thermal crosslinking due to heating, or the radiationinduced crosslinking due to electron beam irradiation can be applied. Among these, because of high crosslinking efficiency, an organic peroxide is preferable.

Still furthermore, in the case of crosslinking a crosslinkable polymer composition for polishing pad in which other crosslinkable polymer is contained, the other crosslinkable polymer may be co-crosslinked or may not. The other crosslinkable polymer may be contained without being crosslinked in the composition for polishing pad.

According to the composition [2] for polishing pad obtained by a crosslinking treatment, a variation of Young's modulus between 0 and 80 degree centigrade can be suppressed to 1000 MPa or less, further to 800 MPa or less and particularly to 600 MPa or less. In addition, between 20 and 50 degree centigrade, a variation of Young's modulus in a temperature difference of 10 degree centigrade can be suppressed to 500 MPa or less, further to 400 MPa or less and particularly to 200 MPa or less. Effects due to these are as mentioned in [1] above.

The third aspect of the present invention is a composition for polishing pad comprising a water-insoluble matrix and a water-soluble particle dispersed in the water-insoluble matrix, wherein the water-insoluble matrix contains crosslinked 1,2-polybutadiene and other crosslinked polymer except for crosslinked ethylene-vinyl acetate copolymer; and a content of the crosslinked 1,2-polybutadiene is 10 % by weight or more based on 100 % by weight of the total of the water-insoluble matrix. The composition is explained in [3] below.

### [3] Composition for polishing pad that contains crosslinked PBD and other crosslinked polymer

The water-insoluble matrix containing crosslinked PBD leads to a composition for polishing pad having an elastic restoring force, and a displacement due to the shearing-stress applied on the polishing part (polishing pad) during polishing can be suppressed small. Therefore, burial of pores and collapsing fluff in a short time due to a plastic deformation by an excess stretching of the polishing part (polishing pad) during polishing and dressing can be prevented. That is, an excellent polishing can be proceeded and maintained for a longer time period, and a pore can be efficiently formed during dressing. In addition, a surface of the polishing part (polishing pad) can be suppressed from excessively fluffing owing to the dressing, and a flatness of the polishing surface of a material to be polished is not disturbed.

A content of crosslinked PBD is 10 % by weight or more, preferably 15 % by weight or more, more preferably 20 % by weight or more and particularly preferably 30 % by weight or more based on 100 % by weight of total of the water-insoluble matrix. However, it is usually 95 % by weight or less. When the content of crosslinked PBD is less than 10 % by weight, an effect due to an inclusion of crosslinked PBD may not be sufficiently exhibited.

Crosslinked PBD may be one that is crosslinked according to whatever methods. That is, methods similar to that of crosslinked EVA in [1] above may be applied.

The water-insoluble matrix according to the composition [3] for polishing pad contains, other than crosslinked PBD, other crosslinked polymer except for crosslinked EVA. When the other crosslinked polymer is contained, "formability" is improved and an excellent abrasion resistance is shown. Accordingly, the polishing part (polishing pad) having longer lifetime can be obtained.

As the other crosslinked polymer, the crosslinked polymers or co-crosslinked polymers in the "other polymer" cited in [1] above may be used. The other crosslinked polymers can be used alone or in combination of two or more. The other crosslinked polymer may be co-crosslinked with uncrosslinked PBD.

Among the other crosslinked polymer, a crosslinked polymer in which at least one polymer selected from an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester-based resin, a saturated polyester-based resin, a polyamide-based resin and a polyacetal-based resin are crosslinked or co-crosslinked is preferable. These polymers have an effect of improving formability and abrasion resistance. In addition, these polymers are less in softening due to water absorption and stable to acids or alkalis contained in the slurry.

The other crosslinked polymer may be one that is crosslinked according to whatever methods similar to crosslinked PBD above.

Furthermore, the other polymer may be a polymer modified by an acid anhydride group, a carboxyl group, a hydroxyl group, an epoxy group, an amino group and the like. The modified polymer may be used alone or in combination of two or more. According to the modification, an affinity with crosslinked EVA, a water-soluble particle or a slurry can be controlled.

When the other crosslinked polymer is contained in the water-insoluble matrix, a content thereof is preferably 5 % by weight or more, more preferably 10 % by weight or more and particularly preferably 20 % by weight or more based on 100 % by weight of the total of the water-insoluble matrix. However, it is usually 90 % by weight or less. When the content of the other crosslinked polymer is less than 5 % by weight, the above effect may not be sufficiently exhibited.

When the other crosslinked polymer is contained in the water-insoluble matrix, preferable contents of crosslinked PBD and the other crosslinked polymer based on 100 % by weight of these, is the respective combinations shown below. That is, the contents of crosslinked PBD and the other crosslinked polymer, respectively, are preferably 10 to 95 % by weight and 5 to 90 % by weight, more preferably 15 to 95 % by weight and 5 to 85 % by weight, further preferably 20 to 90 % by weight and 10 to 80 % by weight and particularly preferably 30 to 80 % by weight and 20 to 70 % by weight.

The water-insoluble matrix may further contain an crosslinkable polymer in addition to crosslinked PBD and the other crosslinked polymer. As the crosslinkable polymer, an uncrosslinked polymer of a thermoplastic resin cited in the explanation of the other crosslinked polymer such as uncrosslinked 1,2-polybutadiene, uncrosslinked ethylene-vinyl acetate copolymer, an elastomer, a rubber, a curable resin and the like can be cited. The crosslinkable polymer may be a polymer modified by an acid anhydride group, a carboxyl group, a hydroxyl group, an epoxy group, an amino group and the like. These polymers may be used alone or in combination of two or more.

When the crosslinkable polymer is contained in the water-insoluble matrix, a content thereof is preferably 80 % by weight or less, more preferably 60 % by weight or less and particularly preferably 50 % by weight or less based on 100 % by weight of the total of the water-insoluble matrix.

The water-insoluble matrix according to the composition [3] for polishing pad comprised of crosslinked PBD whose content is 10 % by weight or more based on the total of the water-insoluble matrix and the other crosslinked polymer, can make an elongation that remains after breaking (hereinafter, simply referred to as "elongation remaining after breaking") 100 % or less when a specimen made of the water-insoluble matrix is broken at 80 degree centigrade according to JIS K 6251. That is, a total length between markers after breaking is two times or less a length between markers before the breaking. The elongation remaining after breaking is preferably 30 % or less, more preferably 10 % or less, particularly preferably 5 % or less, and normally 0 % more. When the elongation remaining after breaking exceeds 100 %, fine fragments scraped or stretched out from a surface of the polishing pad during polishing or dressing unfavorably tend to clog the pores. When, according to JIS K 6251 "Elongation Test Method of Vulcanized Rubber", with a test sample having a shape of dumbbell No. 3, and under the conditions of a pulling rate of 500 mm/min and a test temperature of 80 degree centigrade, a test sample is broken, the "elongation remaining after breaking" is defined as an elongation rate of a length that is obtained by subtracting a length between markers before the test from a total length of the respective lengths from the markers to the broken portion of the test sample that are separated by the breaking to the length between markers before the test. Furthermore, in actual polishing, there is heat generation due to the sliding; accordingly, the test is carried out at 80 degree centigrade.

The water-soluble particle according to the composition [3] for polishing pad may be used as explained in [1] above.

In addition, the uncrosslinked polymer composition for polishing pad may contains a compatibilizing agent cited in [1] above, and a component and an additive that have been so far added to the slurry.

The producing method of the composition [3] for polishing pad may be the same as that of [1].

The fourth aspect of the present invention is a composition for polishing pad obtained by subjecting a crosslinkable polymer composition comprising an uncrosslinked water-insoluble polymer and a water-soluble particle to crosslinking treatment, wherein the uncrosslinked water-insoluble polymer contains uncrosslinked 1,2-polybutadiene and other crosslinkable polymer except for uncrosslinked ethylene-vinyl acetate copolymer; a content of the uncrosslinked 1,2-polybutadiene is 10 % by weight or more based on 100 % by weight of the total of the material to be a water-insoluble matrix; and at least one part of the uncrosslinked 1,2-polybutadiene is crosslinked by the crosslinking treatment. The composition is explained in [4] below.

### [4] Composition for polishing pad obtained from a crosslinkable polymer composition that contains uncrosslinked 1,2-polybutadiene and other crosslinkable polymer but not uncrosslinked ethylene-vinyl acetate copolymer

The "uncrosslinked water-insoluble polymer" forms a water-insoluble matrix by a crosslinking treatment, and the water-insoluble matrix becomes a matrix phase that constitutes a polishing part constituting a polishing pad or an entire polishing pad. The crosslinkable polymer composition contains 10 % by weight or more of uncrosslinked 1,2-polybutadiene (uncrosslinked PBD) based on 100 % by weight of the total of the material to be a water-insoluble matrix and other crosslinkable polymer, but it does not contain uncrosslinked ethylene-vinyl acetate copolymer (uncrosslinked EVA). Uncrosslinked PBD and other crosslinkable polymer are at least partially crosslinked, respectively when the crosslinkable polymer composition for polishing pad is crosslinked. A crosslinked portion of uncrosslinked PBD becomes crosslinked PBD in [3] above or a co-crosslinked polymer made of uncrosslinked PBD and the other crosslinkable polymer. Accordingly, an obtained polishing part (polishing pad) is excellent in elastic restoring force.

A content of uncrosslinked PBD in the crosslinkable polymer composition is 10 % by weight or more, preferably 15 % by weight or more, more preferably 20 % by weight or more and particularly preferably 30 % by weight or more based on 100 % by weight of the total of the material to be a water-insoluble matrix. However, it is usually 95 % by weight or less. When the content of uncrosslinked PBD is less than 10 % by weight, the above effects by crosslinking treatment may not be sufficiently exhibited.

The crosslinkable polymer composition contains other crosslinkable polymer except for uncrosslinked EVA. As the other crosslinkable polymer, uncrosslinked ones of such as various kinds of thermoplastic resins, elastomers, rubbers and thermosetting resins cited in [1] above can be used alone or in combinations thereof. Among these, corresponding uncrosslinked ones of an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester resin, a saturated polyester-based resin, a polyamide-based resin and a polyacetal-based resin are preferable. When these polymers are crosslinked, they become corresponding crosslinked polymers or crosslinked copolymers and a resultant crosslinked polymers exhibit effects similar to that in [3] above. In the case the other crosslinkable polymer is used, a content thereof in the crosslinkable polymer composition is preferably 5 to 90 % by weight, more preferably 10 to 80 % by weight and particularly preferably 20 to 60 % by weight based on 100 % by weight of the total of the material to be a water-insoluble matrix. When the content of the other crosslinkable polymer is 5 % by weight or less, a resultant composition for polishing pad may be inferior in formability and abrasion resistance.

A preferable combination between a content of uncrosslinked PBD and a content of the other crosslinkable polymer is as follows. That is, the contents of uncrosslinked PBD and the other crosslinkable polymer, respectively, are preferably 10 to 95 % by weight and 5 to 90 % by weight, more preferably 15 to 95 % by weight and 5 to 85 % by weight, further preferably 20 to 90 % by weight and 10 to 80 % by weight and particularly preferably 30 to 80 % by weight and 20 to 70 % by weight.

The crosslinkable polymer composition for polishing pad contains a water-soluble particle.

The water-soluble particle according to the composition [4] for polishing pad may be used as explained in [1] above.

Furthermore, the crosslinkable polymer composition for polishing pad may contain a compatibilizing agent cited in [1] above, and a component and an additive that have been so far added to the slurry.

The "crosslinking treatment" is applied to the crosslinkable polymer composition for polishing pad. In this crosslinking treatment, uncrosslinked PBD and other crosslinkable polymer may be co-crosslinked or may not be co-crosslinked. In addition, a crosslinking of uncrosslinked PBD and that of other crosslinkable polymer may be simultaneously carried out, or any one thereof may be carried out precedently and followed by the other. Furthermore, a crosslinking method is not particularly limited and may be the same as that of the composition [2] for polishing pad.

This crosslinking treatment leads to an amount of crosslinked PBD of 10 % by weight or more in the water-insoluble matrix after crosslinking, and a crosslinking degree of crosslinked PBD can be 5 % or more, more preferably 10 % or more and particularly preferably 15 % or more. The crosslinking degree may be 100 %.

The fifth aspect of the present invention is a composition for polishing pad comprising a water-insoluble matrix and a water-soluble particle dispersed in the water-insoluble matrix, wherein the water-insoluble matrix contains crosslinked ethylene-vinyl acetate copolymer and crosslinked 1,2-polybutadiene; and a content of the crosslinked ethylene-vinyl acetate copolymer or the crosslinked 1,2-polybutadiene is 10 % by weight or more based on 100 % by weight of the total of the water-insoluble matrix.

The water-insoluble matrix containing crosslinked EVA leads to a composition for polishing pad excellent in formability and abrasion resistance, and temperature dependence of Young's modulus can be reduced. Since the Young's modulus is improved so as to vary slowly with temperature, the composition for polishing pad is endowed with an elastic recovering force.

The water-insoluble matrix containing crosslinked PBD leads to a composition for polishing pad having a further improved elastic restoring force. Therefore, an excellent polishing can be proceeded and maintained for a longer time period, and a pore can be efficiently formed during dressing. In addition, a flatness of the polishing surface of a material to be polished is not disturbed.

In the fifth aspect of the present invention, a composition for polishing pad can be a composition for polishing pad (I) in which a content of crosslinked ethylene-vinyl acetate copolymer is 10 % by weight or more based on 100 % by weight of the total of a water-insoluble matrix (i) and a composition for polishing pad (II) in which a content of crosslinked 1,2-polybutadiene is 10 % by weight or more based on 100 % by weight of the total of a water-insoluble matrix (ii). These compositions are explained in [5] and [6] below.

### [5] Composition for polishing pad (I)

In the composition for polishing pad (I), a content of crosslinked EVA is 10 % by weight or more, preferably 15 % by weight or more, more preferably 20 % by weight or more and particularly preferably 30 % by weight or more based on 100 % by weight of the total of the water-insoluble matrix (i). However, the content is less than 100 % by weight, and usually 95 % by weight or less. When the content of crosslinked EVA is less than 10 % by weight, effects due to crosslinked EVA may not be sufficiently exhibited.

A crosslinking method of EVA is not particularly limited.

In addition, a content of crosslinked PBD is preferably 5 % by weight or more, more preferably 10 % by weight or more and particularly preferably 20 % by weight or more based on 100 % by weight of the total of the water-insoluble matrix (i). When the content of crosslinked PBD is less than 5 % by weight, effects due to the inclusion thereof may not be sufficiently exhibited.

Further, a content of crosslinked EVA is preferably exceeding 50 % by weight, more preferably exceeding 50 % by weight and 90 % by weight or less, particularly preferable 55 to 80 % by weight based on 100 % by weight of the total of crosslinked EVA and crosslinked PBD.

Furthermore, a crosslinking method of PBD is not particularly limited. EVA and PBD may be co-crosslinked.

A preferable combination between a content (X₁) of crosslinked EVA and a content (Y₁) of crosslinked PBD based on 100 % by weight of the total of the water-insoluble matrix (i) is as follows. It is preferable that X₁ is exceeding 10 % by weight and Y₁ is 5 % by weight or more and {X₁/(X₁ + Y₁) × 100} > 50. More preferably, X₁ is exceeding 20 % by weight and Y₁ is 10 % by weight or more and {X₁/(X₁ + Y₁) × 100} > 50. Further preferably, X₁ is exceeding 30 % by weight and Y₁ is 15 % by weight or more and {X₁/(X₁ + Y₁) × 100} > 50, and particularly preferably, X₁ is exceeding 40 % by weight and Y₁ is 20 % by weight or more and {X₁/(X₁ + Y₁) × 100) > 50.

The water-insoluble matrix (i) may further contain other polymer in addition to crosslinked EVA and crosslinked PBD. As the other polymer, ones of such as various kinds of thermoplastic resins, elastomers, rubbers and thermosetting resins cited in [1] above can be used alone or in combinations thereof. Among these, ones of an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester resin, a saturated polyester-based resin, a polyamide-based resin and a polyacetal-based resin are preferable. The other polymer may be an uncrosslinked polymer or a crosslinked polymer. In addition, when the other polymer is a crosslinked polymer, the polymer may be one that is crosslinked according to whatever methods and may be one that is co-crosslinked with EVA or PBD, and may not be co-crosslinked therewith. Furthermore, the other polymer may be a polymer modified by an acid anhydride group, a carboxyl group, a hydroxyl group, an epoxy group, an amino group and the like. The modified polymer may be used alone or in combination of two or more.

When the other polymer is contained in the water-insoluble matrix (i), a content of the polymer is preferably 5 to 70 % by weight, more preferably 5 to 50 % by weight and particular preferably 10 to 40 % by weight based on 100 % of the total of the water-insoluble matrix (i).

The water-insoluble matrix (i) constituting the composition [5] for polishing pad can make an elongation according to the method in [1] above 100 % or less, preferably 30 % or less, more preferably 10 % or less and further preferably 5 % or less. However, it is usually 0 % or more.

### [6] Composition for polishing pad (II)

In the composition for polishing pad (II), a content of crosslinked PBD is 10 % by weight or more, preferably 15 % by weight or more, more preferably 20 % by weight or more and particularly preferably 30 % by weight or more based on 100 % by weight of the total of the water-insoluble matrix (ii). However, the content is usually 95 % by weight or less. When the content of crosslinked PBD is less than 10 % by weight, the above effects may not be sufficiently exhibited. A crosslinking method of PBD is not particularly limited.

A content of crosslinked EVA is preferably 5 % by weight or more, more preferably 10 % by weight or more, further preferably 20 % by weight or more and particularly preferably 30 % by weight or more based on 100 % by weight of the total of the water-insoluble matrix (ii).

A crosslinking method of EVA is not particularly limited. EVA and PBD may be co-crosslinked.

A content of crosslinked PBD is preferably 50 % or more by weight, more preferably 60 to 90 % by weight and particularly preferably 70 to 90 % by weight based on the total of crosslinked EVA and crosslinked PBD.

A preferable combination between a content (X₂) of crosslinked PBD and a content (Y₂) of crosslinked EVA based on 100 % by weight of the total of the water-insoluble matrix (ii) is as follows. It is preferable that X₂ is exceeding 10 % by weight and Y₂ is 5 % by weight or more and {X₂/(X₂ + Y₂) × 100} > 50. More preferably, X₂ is exceeding 20 % by weight and Y₂ is 10 % by weight or more and {X₂/(X₂ + Y₂) × 100) > 50. Further preferably. X₂ is exceeding 30 % by weight and Y₂ is 15 % by weight or more and {X₂/(X₂ + Y₂) × 100} > 50, and particularly preferably, X₂ is exceeding 40 % by weight and Y₂ is 20 % by weight or more and {X₂/(X₂ + Y₂) × 100} > 50.

The water-insoluble matrix (ii) may further contain other polymer in addition to crosslinked EVA and crosslinked PBD. As the other polymer, ones of such as various kinds of thermoplastic resins, elastomers, rubbers and thermosetting resins cited in [1] above can be used alone or in combinations thereof. Among these, ones of an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester resin, a saturated polyester-based resin, a polyamide-based resin and a polyacetal-based resin are preferable. The other polymer may be an uncrosslinked polymer or a crosslinked polymer. In addition, when the other polymer is a crosslinked polymer, the polymer may be one that is crosslinked according to whatever methods and may be one that is co-crosslinked with EVA or PBD, and may not be co-crosslinked therewith. Furthermore, the other polymer may be a polymer modified by an acid anhydride group, a carboxyl group, a hydroxyl group, an epoxy group, an amino group and the like. The modified polymer may be used alone or in combination of two or more. According to the modification, an affinity with crosslinked EVA, a water-soluble particle or a slurry can be controlled.

When the other polymer is contained in the water-insoluble matrix (ii), a content of the polymer is preferably 5 to 70 % by weight, more preferably 10 to 60 % by weight and particular preferably 20 to 50 % by weight based on 100 % of the total of the water-insoluble matrix (ii).

The water-insoluble matrix (ii) constituting the composition [6] for polishing pad can make an elongation according to the method in [11 above 100 % or less.

The water-soluble particle according to the compositions [5] and [6] for polishing pad may be used as explained in [1] above.

In addition, the compositions for polishing pad may contain a compatibilizing agent cited in [1] above, and a component and an additive that have been so far added to the slurry. Further, producing method of the compositions is similar to that in [1] above.

According to the compositions [5] and [6] for polishing pad, a variation of Young's modulus between 0 and 80 degree centigrade can be suppressed to 1000 MPa or less, further to 800 MPa or less and particularly to 600 MPa or less. In addition, between 20 and 50 degree centigrade, a variation of Young's modulus in a temperature difference of 10 degree centigrade can be suppressed to 500 MPa or less, further to 400 MPa or less and particularly to 200 MPa or less. These effects is as described in [1] above.

The sixth aspect of the present invention is a composition for polishing pad obtained by subjecting a crosslinkable polymer composition comprising an uncrosslinked water-insoluble polymer and a water-soluble particle to crosslinking treatment, wherein the uncrosslinked water-insoluble polymer contains uncrosslinked ethylene-vinyl acetate copolymer and uncrosslinked ethylene-vinyl acetate copolymer; a content of the uncrosslinked 1,2-polybutadiene or the uncrosslinked 1,2-polybutadiene is 10 % by weight or more based on 100 % by weight of the total of the material to be a water-insoluble matrix; and at least one part of the uncrosslinked ethylene-vinyl acetate copolymer and the uncrosslinked 1,2-polybutadiene is crosslinked by the crosslinking treatment.

In the sixth aspect of the present invention, a composition for polishing pad can be a composition for polishing pad (III) in which a content of uncrosslinked ethylene-vinyl acetate copolymer is 10 % by weight or more based on 100 % by weight of the total of a material to be a water-insoluble matrix and a composition for polishing pad (IV) in which a content of uncrosslinked 1,2-polybutadiene is 10 % by weight or more based on 100 % by weight of the total of a material to be a water-insoluble matrix. Uncrosslinked EVA and/or uncrosslinked PBD are at least partially crosslinked when the crosslinkable polymer composition for polishing pad is crosslinked. A crosslinked portion of uncrosslinked EVA becomes crosslinked EVA in [1] above and a crosslinked portion of uncrosslinked PBD becomes crosslinked PBD in [3] above. These compositions are explained in [7] and [8] below.

### [7] Composition for polishing pad (III) obtained from a crosslinkable polymer composition that contains uncrosslinked ethylene-vinyl acetate copolymer and uncrosslinked 1,2-polybutadiene

A content of uncrosslinked EVA in the crosslinkable polymer composition is 10 % by weight or more, preferably 15 % by weight or more, more preferably 20 % by weight or more and particularly preferably 30 % by weight or more based on 100 % by weight of the total of the material to be a water-insoluble matrix. However, it is less than 100 % by weight and usually 95 % by weight or less. When the content of uncrosslinked EVA is less than 10 % by weight, effects due to the inclusion thereof may not be sufficiently exhibited.

A content of vinyl acetate units of uncrosslinked EVA may be the same as EVA in [1] above.

A content of uncrosslinked PBD in the crosslinkable polymer composition is preferably 5 % by weight or more, more preferably 10 % by weight or more and particularly preferably 20 % by weight or more based on 100 % by weight of the total of the material to be a water-insoluble matrix. When the content of uncrosslinked PBD is less than 5 % by weight, a content of a resultant crosslinked PBD may be little, and effects due to the inclusion thereof may not be sufficiently exhibited.

In addition, a content of uncrosslinked EVA is preferably exceeding 50 % by weight, more preferably exceeding 50 % by weight and 90 % by weight or less and particularly preferably 60 to 80 % by weight based on 100 % by weight of the total of uncrosslinked EVA and uncrosslinked PBD.

Furthermore, a preferable combination between a content (X₃) of uncrosslinked EVA and a content (Y₃) of uncrosslinked PBD based on 100 % by weight of the total of the material to be a water-insoluble matrix is as follows. It is preferable that X₃ is exceeding 10 % by weight and Y₃ is 5 % by weight or more and {X₃/ (X₃ + Y₃) × 100} > 50. More preferably, X₃ is exceeding 20 % by weight and Y₃ is 10 % by weight or more and {X₃/(X₃ + Y₃) × 100} > 50. Further preferably, X₃ is exceeding 30 % by weight and Y₃ is 15 % by weight or more and {X₃/(X₃ + Y₃) × 100} > 50, and particularly preferably, X₃ is exceeding 40 % by weight and Y₃ is 20 % by weight or more and {X₃/(X₃ + Y₃) × 100} > 50.

The crosslinkable polymer composition may contain other crosslinkable polymer except for uncrosslinked EVA and uncrosslinked PBD. As the other crosslinkable polymer, uncrosslinked ones of such as various kinds of thermoplastic resins, elastomers, rubbers and thermosetting resins cited in [1] above can be used alone or in combinations thereof. Among these, corresponding uncrosslinked ones of an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester resin, a saturated polyester-based resin, a polyamide-based resin and a polyacetal-based resin are preferable. When these polymers are crosslinked, they become corresponding crosslinked polymers or crosslinked copolymers and a resultant crosslinked polymers exhibit effects similar to that in [5] above. In the case the other crosslinkable polymer is used, an amount thereof to be charged into the crosslinkable polymer composition is preferably 5 to 70 % by weight and more preferably 10 to 40 % by weight based on 100 % by weight of the total of the material to be a water-insoluble matrix.

The water-insoluble matrix (iii) formed by crosslinking the material to be a water-insoluble matrix can make an elongation according to the method in [1] above 100 % or less, preferably 30 % or less, more preferably 10 % or less and further preferably 5 % or less. However, it is usually 0 % or more.

The crosslinkable polymer composition for polishing pad contains a water-soluble particle.

The water-soluble particle according to the composition [7] for polishing pad may be used as explained in [1] above.

In addition, the crosslinkable polymer composition for polishing pad may contain a compatibilizing agent cited in [1] above, and a component and an additive that have been so far added to the slurry.

The "crosslinking treatment" is applied to the crosslinkable polymer composition for polishing pad, and thereby uncrosslinked EVA and uncrosslinked PBD contained in the uncrosslinked water-insoluble polymer constituting the crosslinkable polymer composition for polishing pad is at least partially crosslinked. In this crosslinking treatment, uncrosslinked EVA and uncrosslinked PBD may be co-crosslinked or may not be co-crosslinked. In addition, a crosslinking of uncrosslinked EVA and uncrosslinked PBD may be simultaneously carried out, or any one thereof may be carried out precedently and followed by the other. A content of crosslinked EVA formed owing to this crosslinking treatment can be 10 % by weight or more based on 100 % by weight of the total of the water-insoluble matrix formed after crosslinking. In addition, a crosslinking degree of crosslinked EVA and crosslinked PBD can be 5 % or more, more preferably 10 % or more and particularly preferably 15 % or more. The crosslinking degree may be 100 %.

Further, in the case crosslinking the crosslinkable polymer composition for polishing pad comprising other crosslinkable polymer, the other crosslinkable polymer may be co-crosslinked or may not be co-crosslinked. The other crosslinkable polymer may be contained without being crosslinked in the composition (III) for polishing pad.

A crosslinking method may be the same as explained in [2] above.

### [8] Composition for polishing pad (IV) obtained from a crosslinkable polymer composition that contains uncrosslinked ethylene-vinyl acetate copolymer and uncrosslinked 1,2-polybutadiene

A content of uncrosslinked PBD in the crosslinkable polymer composition is 10 % by weight or more, preferably 15 % by weight or more, more preferably 20 % by weight or more and particular preferably 30 % by weight or more based on 100 % by weight of the total of the material to be a water-insoluble matrix. When the content of uncrosslinked PBD is less than 10 % by weight, effects due to the inclusion thereof may not be sufficiently exhibited.

A content of uncrosslinked EVA in the crosslinkable polymer composition is preferably 5 % by weight or more, more preferably 10 % by weight or more, further preferably 20 % by weight or more and particularly preferably 30 % by weight or more based on 100 % by weight of the total of the material to be a water-insoluble matrix. When the content of uncrosslinked EVA is less than 5 % by weight, effects due to the inclusion thereof may not be sufficiently exhibited.

In addition, a content of vinyl acetate units of uncrosslinked EVA may be the same as EVA in [1] above.

Furthermore, a content of uncrosslinked PBD is preferably 50 % by weight or more and more preferably 50 to 90 % by weight based on 100 % by weight of the total of uncrosslinked EVA and uncrosslinked PBD.

A preferable combination between a content (X₄) of uncrosslinked PBD and a content (Y₄) of uncrosslinked EVA based on 100 % by weight of the total of the material to be a water-insoluble matrix is as follows. It is preferable that X₄ is exceeding 10 % by weight and Y₄ is 5 % by weight or more and {X₄/(X₄ + Y₄) × 100} > 50. More preferably, X₄ is exceeding 20 % by weight and Y₄ is 10 % by weight or more and {X₄/(X₄ + Y₄) × 100} > 50. Further preferably, X₄ is exceeding 30 % by weight and Y₄ is 15 % by weight or more and {X₄/(X₄ + Y₄) × 100} > 50, and particularly preferably, X₄ is exceeding 40 % by weight and Y₄ is 20 % by weight or more and {X₄/(X₄ + Y₄) × 100} > 50.

The crosslinkable polymer composition may contain other crosslinkable polymer except for uncrosslinked EVA and uncrosslinked PBD. As the other crosslinkable polymer, uncrosslinked ones of such as various kinds of thermoplastic resins, elastomers, rubbers and thermosetting resins cited in [1] above can be used alone or in combinations thereof. Among these, corresponding uncrosslinked ones of an olefinic resin such as polyethylene, an ABS-based resin such as acrylonitrile-styrene-butadiene copolymer, a styrene-based elastomer such as styrene-butadiene-styrene copolymer, a polyacrylic resin, a vinyl ester resin, a saturated polyester-based resin, a polyamide-based resin and a polyacetal-based resin are preferable. When these polymers are crosslinked, they become corresponding crosslinked polymers or crosslinked copolymers and a resultant crosslinked polymers exhibit effects similar to that in [6] above. In the case the other crosslinkable polymer is used, an amount thereof to be charged into the crosslinkable polymer composition is preferably 5 to 70 % by weight, more preferably 5 to 50 % by weight and particularly preferably 5 to 30 % by weight based on 100 % by weight of the total of the material to be a water-insoluble matrix.

The water-insoluble matrix (iv) formed by crosslinking the material to be a water-insoluble matrix can make an elongation according to the method in [1] above 100 % or less, preferably 30 % or less, more preferably 10 % or less and further preferably 5 % or less. However, it is usually 0 % or more.

The crosslinkable polymer composition for polishing pad contains a water-soluble particle.

The water-soluble particle may be used as explained in [1] above.

In addition, the crosslinkable polymer composition for polishing pad may contain a compatibilizing agent cited in [1] above, and a component and an additive that have been so far added to the slurry.

The "crosslinking treatment" is applied to the crosslinkable polymer composition for polishing pad, and thereby uncrosslinked EVA and uncrosslinked PBD contained in the uncrosslinked water-insoluble polymer constituting the crosslinkable polymer composition for polishing pad is at least partially crosslinked. In this crosslinking treatment, uncrosslinked EVA and uncrosslinked PBD may be co-crosslinked or may not be co-crosslinked. In addition, a crosslinking of uncrosslinked EVA and uncrosslinked PBD may be simultaneously carried out, or any one thereof may be carried out precedently and followed by the other. A content of crosslinked EVA formed owing to this crosslinking treatment can be 10 % by weight or more based on 100 % by weight of the total of the water-insoluble matrix (iv) formed after crosslinking. In addition, a crosslinking degree of crosslinked EVA and crosslinked PBD can be 5 % or more, more preferably 10 % or more and particularly preferably 15 % or more. The crosslinking degree may be 100 %.

Further, in the case crosslinking the crosslinkable polymer composition for polishing pad comprising other crosslinkable polymer, the other crosslinkable polymer may be co-crosslinked or may not be co-crosslinked. The other crosslinkable polymer may be contained without being crosslinked in the composition (IV) for polishing pad.

A crosslinking method may be the same as explained in [2] above.

According to the compositions [7] and [8] for polishing pad, a variation of Young's modulus between 0 and 80 degree centigrade can be suppressed to 1000 MPa or less, further to 800 MPa or less and particularly to 600 MPa or less. In addition, between 20 and 50 degree centigrade, a variation of Young's modulus in a temperature difference of 10 degree centigrade can be suppressed to 500 MPa or less, further to 400 MPa or less and particularly to 200 MPa or less. These effects is as described in [1] above.

### [B] Polishing pad

In the next place, a polishing pad according to the invention will be explained.

A polishing pad according to the invention comprises a polishing part made of any one of the compositions for polishing pad mentioned in [1] to [8] above. The "polishing part" is an entirety or a part of the polishing pad, and constitutes an entirety or a part of a surface of a polishing side. And the polishing part can exhibit a polishing effect against a material to be polished when slurry or water is supplied. An area of the polishing part in the polishing pad is not particularly limited and is preferably at least 50 % or more, more preferably 80 % or more and further preferably 90 % or more of a surface of a polishing side. When the area is less than 50 % of the above surface, a polishing effect may not be sufficiently exhibited.

The polishing pad according to the present invention may comprise a portion that has other functions in addition to the polishing part. For instance, the portion includes a window part that detects an end point with an optical endpoint detector and the like. As this window part, a material where a light transmittance at a wavelength between 100 and 3000nm is 0.1 % or more, preferably 2 % or more, or an integrated transmittance in a wavelength range between 100 and 3000nm is 0.1% or more. preferably 2% or more in the case a thickness is 2mm can be used.

Furthermore, the polishing pad according to the present invention may comprise a polishing part made of another composition for polishing pad.

A shape of the polishing pad is not particularly limited and may be disc-like, belt-like or roller-like. And it depends on a polishing apparatus and a preferable may be appropriately selected. A magnitude of the polishing pad is not particularly limited. In the case of disc-like polishing pad, preferable diameter is 0.5 to 500 cm, further preferably 1.0 to 250 cm and particularly preferably 20 to 200 cm, and preferable thickness is 0.1 to 100 mm and particularly preferably 1 to 10 mm. A groove can be formed on the surface of the polishing side, as necessary. The groove makes slurry distributed all over the surface of the polishing side, and a temporally retaining effect thereof can be exhibited. Furthermore, the groove becomes a passage through which wastes such as polishing wastages generated during polishing are efficiently exhausted. The shape of the groove is not particularly limited and may be formed into an annular, spiral, lattice-like or dot pattern-like one.

A producing method of the polishing pad according to the invention is not particularly limited. Since crosslinking is necessary, it is usually molded with a metal mold. In addition, after forming into a sheet, the sheet can be punched into a predetermined shape. Furthermore, after forming in block, it can be also sliced into a predetermined shape.

The polishing pad according to the invention can be a multi-layer polishing pad provided with a supporting layer on a back surface (it means a side opposite a surface supplied for the polishing, and hereinafter referred to also as a "non-polishing surface") side thereof.

The supporting layer is a layer that supports the polishing pad by the non-polishing surface side. The support layer is preferably softer than the polishing pad. When the polishing pad is provided with a softer support layer, even when a thickness of the polishing pad is thin (for instance, 0.5 mm or less), the polishing pad can be inhibited from peeling off the supporting layer or the polishing surface of the polishing pad can be inhibited from curving; resulting in stable polishing. The hardness of the supporting layer is preferably 90 % or less of that of the polishing pad, more preferably 80 % or less and particularly preferably 70 % or less. The lower limit thereof is usually 10 %. Furthermore, Shore D hardness of the supporting layer is preferably 70 or less, more preferably 60 or less and still more preferably 50 or less. The lower limit is usually 1.

Furthermore, a planar shape of the supporting layer is not particularly limited and may be the same as that of the polishing pad or different from the polishing pad. As a planar shape of the supporting layer, for instance, a circular shape, a polygonal shape (tetragon and the like) and the like can be adopted. Still furthermore, a thickness of the supporting layer is not particularly limited and is preferably 0.1 to 5 mm and more preferably 0.5 to 2 mm. However, when the polishing pad is provided with a window part and detects an end point with an optical endpoint detector, in order not to interrupt light that transmits the window part, the window part similar to the polishing pad or the same as that can be provided, or in the case providing no window parts, a notched shape that allows light going through may be formed.

A material that constitutes the supporting layer is not particularly limited. In view of easiness to form a predetermined shape and state and capability of endowing an appropriate elasticity, an organic material is preferably used. As the organic material, various kinds of polymers that constitute the water-insoluble matrix in the composition for polishing pad can be applied. In addition, the organic material that constitutes the supporting layer may be the crosslinked polymer or an uncrosslinked polymer. The supporting layer may be a porous body (foamed body) or may be a nonporous body.

The supporting layer may be formed into one layer or two or more layers. Furthermore, the supporting layer and the polishing pad may be directly laminated or may be laminated through another layer. Still furthermore, the supporting layer may be adhered to the polishing pad or another layer with an adhesive, an adhesive material (such as adhesive tape) or the like, or may be integrally connected by partially melting.

The polishing pad and the multi-layer polishing pad according to the invention are excellent in elastic restoring force owing to an inclusion of a crosslinked polymer. Therefore, these pads are very useful for STI that are required of particularly high flatness in CMP, and polishing of a metal wiring comprised of A1, Cu or the like, a via plug comprised of A1, Cu, W or the like, an interlayer insulating film such as oxide film, Low-k and BPSG, a nitride film such as TaN and TiN, polysilicon, bare silicon and the like.

### Example

The present invention is specifically explained below by way of Example.

### [1] Production of polishing pad

### Example 1-1

80 parts by weight of uncrosslinked ethylene-vinyl acetate copolymer (Trade name "Ultracene 630" manufactured by Tosoh Corporation), 20 parts by weight of uncrosslinked 1,2-polybutadiene (Trade name "JSR RB830" manufactured by JSR Corporation) and 100 parts by weight of β-cyclodextrin (Trade name "Dexipearl β-100" manufactured by Bio Research Corporation of Yokohama, average particle diameter: 20 µm) that is a water-soluble particle were kneaded by use of a two shaft extruder controlled at 160 degree centigrade. Thereafter, 0.5 part by weight of organic peroxide (Trade name "Percumyl D40" manufactured by Nippon Oil & Fats Co., Ltd.) was added followed by further kneading. The kneaded material was held in a metal mold controlled at 170 degree centigrade for 18 minutes and thereby subjected to crosslinking, and a polishing pad having a diameter of 60 cm and a thickness of 3 mm was obtained. A content of ethylene-vinyl acetate copolymer in a water-insoluble matrix of the obtained polishing pad was measured according to pyrolysis-gas chromatography (hereinafter referred to simply as "Py-GC") and found to be 82 % by weight. Furthermore, a content of the water-soluble particle was substantially 40 % by volume based on 100 % by volume of the total of the polishing pad. (The content was the same even when a sum of the water-insoluble matrix and the water-soluble particle is taken as 100 % by volume.)

### Example 1-2

A polishing pad having a diameter of 60 cm and a thickness of 3 mm was obtained similarly to Example 1-1 except for using 60 parts by weight of uncrosslinked ethylene-vinyl acetate (Trade name "Ultracene 630" manufactured by Tosoh Corporation) and 40 parts by weight of uncrosslinked 1,2-polybutadiene (Trade name "JSR RB830" manufactured by JSR Corporation). A content of ethylene-vinyl acetate copolymer in a water-insoluble matrix of the obtained polishing pad was 61 % by weight by Py-GC. Furthermore, a volume content of the water-soluble particle was substantially 40 % by volume similarly to Example 1-1.

### Example 1-3

30 parts by weight of uncrosslinked ethylene-vinyl acetate (Trade name "Ultracene 630" manufactured by Tosoh Corporation) and 70 parts by weight of uncrosslinked polyethylene (Trade name "YF30" manufactured by Nihon Polychem Corporation) in place of uncrosslinked 1,2-polybutadiene are kneaded by a two shaft extruder similarly to Example 1-1. Thereafter, a polishing pad having a diameter of 60 cm and a thickness of 3 mm was obtained similarly to Example 1-1 except for using 1.0 part by weight of organic peroxide (Trade name "Percumyl D40" manufactured by Nippon Oil & Fats Co., Ltd.). A content of ethylene-vinyl acetate copolymer in a water-insoluble matrix of the obtained polishing pad was 31 % by weight by Py-GC. Furthermore, a volume content of the water-soluble particle was substantially 40 % by volume similarly to Example 1-1.

### Comparative example 1-1

100 parts by weight of uncrosslinked 1,2-polybutadiene (Trade name "JSR RB830" manufactured by JSR Corporation) and 100 parts by weight of β-cyclodextrin (Trade name "Dexipearl β-100" manufactured by Bio Research Corporation of Yokohama, average particle diameter: 20 µm) that is a water-soluble particle were kneaded by use of a two shaft extruder controlled at 150 degree centigrade. Thereafter, 0.3 part by weight of organic peroxide (Trade name "Percumyl D40" manufactured by Nippon Oil & Fats Co., Ltd.) was added followed by further kneading. The kneaded material was held in a metal mold controlled at 170 degree centigrade for 18 minutes and thereby subjected to crosslinking, and a polishing pad having a diameter of 60 cm and a thickness of 3 mm was obtained. A content of ethylene-vinyl acetate copolymer in a water-insoluble matrix of the obtained polishing pad was 0 % by weight by Py-GC. Furthermore, a content of the water-soluble particle was substantially 40 % by volume based on 100 % by volume of the total of the polishing pad. (The content was the same even when a sum of the water-insoluble matrix and the water-soluble particle is taken as 100 % by volume.)

### Example 2-1

70 parts by weight of uncrosslinked 1,2-polybutadiene (Trade name "JSR RB830" manufactured by JSR Corporation), 30 parts by weight of uncrosslinked ethylene-vinyl acetate copolymer (Trade name "Ultracene 630" manufactured by Tosoh Corporation) and 40 parts by weight of β-cyclodextrin (Trade name "Dexipearl β -100" manufactured by Bio Research Corporation of Yokohama, average particle diameter: 20 µm) that is a water-soluble particle were kneaded by use of a two shaft extruder controlled at 160 degree centigrade. Thereafter, 1.0 part by weight of organic peroxide (Trade name "Percumyl D40" manufactured by Nippon Oil & Fats Co., Ltd.) was added followed by further kneading. The kneaded material was held in a metal mold controlled at 170 degree centigrade for 18 minutes and thereby subjected to crosslinking, and a polishing pad having a diameter of 60 cm and a thickness of 3 mm was obtained. A content of 1,2-polybutadiene in a water-insoluble matrix of the obtained polishing pad was measured by Py-GC and found to be 72 % by weight. Furthermore, a content of the water-soluble particle was substantially 21 % by volume based on 100 % by volume of the total of the polishing pad. (The content was the same even when a sum of the water-insoluble matrix and the water-soluble particle is taken as 100 % by volume.)

### Example 2-2

A polishing pad having a diameter of 60 cm and a thickness of 3 mm was obtained similarly to Example 2-1 except for using 55 parts by weight of uncrosslinked 1,2-polybutadiene (Trade name "JSR RB830" manufactured by JSR Corporation) and 45 parts by weight of uncrosslinked ethylene-vinyl acetate (Trade name "Ultracene 630" manufactured by Tosoh Corporation). A content of 1,2-polybutadiene in a water-insoluble matrix of the obtained polishing pad was 58 % by weight by Py-GC. Furthermore, a volume content of the water-soluble particle was substantially 21 % by volume similarly to Example 2-1.

### Example 2-3

70 parts by weight of uncrosslinked 1,2-polybutadiene (Trade name "JSR RB830" manufactured by JSR Corporation) and 30 parts by weight of uncrosslinked polyethylene (Trade name "YF30" manufactured by Nihon Polychem Corporation) in place of uncrosslinked ethylene-vinyl acetate are kneaded by a two shaft extruder similarly to Example 2-1. Thereafter, a polishing pad having a diameter of 60 cm and a thickness of 3 mm was obtained similarly to Example 1-1 except for using 1.0 part by weight of organic peroxide (Trade name "Percumyl D40" manufactured by Nippon Oil & Fats Co., Ltd.). A content of 1,2-polybutadiene in a water-insoluble matrix of the obtained polishing pad was 73 % by weight by Py-GC. Furthermore, a volume content of the water-soluble particle was substantially 21 % by volume similarly to Example 2-1.

### Comparative example 2-1

100 parts by weight of uncrosslinked 1,2-polybutadiene (Trade name "JSR RB830" manufactured by JSR Corporation) and 40 parts by weight of β-cyclodextrin (Trade name "Dexipearl β-100" manufactured by Bio Research Corporation of Yokohama, average particle diameter: 20 µm) that is a water-soluble particle were kneaded by use of a two shaft extruder controlled at 160 degree centigrade. Thereafter, 0.3 part by weight of organic peroxide (Trade name "Percumyl D40" manufactured by Nippon Oil & Fats Co., Ltd.) was added followed by further kneading. The kneaded material was held in a metal mold controlled at 170 degree centigrade for 18 minutes and thereby subjected to crosslinking, and a polishing pad having a diameter of 60 cm and a thickness of 3 mm was obtained. A content of 1,2-polybutadiene in a water-insoluble matrix of the obtained polishing pad was 96 % by weight by Py-GC. Furthermore, a content of the water-soluble particle was substantially 21 % by volume based on 100 % by volume of the total of the polishing pad.

### [2] Evaluation of polishing pad

### 2-1. Evaluation of formability

Similarly to Examples 1-1 to 1-3, 2-1 to 2-3 and Comparative Examples 1-1 and 2-1, 20 polishing pads were produced, respectively. However, demolding was carried out by two different ways. In one method, a molded body was grasped by one end thereof with a jig and transferred as it is up to a susceptor located adjacent to a mold machine. In the other method, a thin metal plate as an auxiliary plate was inserted under the molded body and, in order not to deflect the molded body, the auxiliary plate was grasped and transferred as it is up to a susceptor adjacently located to the mold machine. According to each of the demolding methods, 10 polishing pads were produced. The obtained polishing pads were observed and the number of the polishing pads in which crack or fissuring was found according to visual inspection was counted, and thereby a rate of cracked or fissured ones to a total product number was calculated. These results are shown in Tables 1 and 2.

### 2-2. Evaluation of abrasion resistance

Test pieces were cut out of the polishing pads obtained according to Examples 1-1 to 1-3, 2-1 to 2-3 and Comparative Examples 1-1 and 2-1, 20 and subjected to measurements of wearing volumes by use of a DIN abrasion tester according to JIS K 6264. Results thereof are together shown in Tables 1 and 2.

### 2-3. Evaluation of temperature dependence of Young's modulus

Young's modulus of the strip test piece of 2.5 mm × 1.0 mm made of the composition was measured with viscoelastometer (Model "RSA II" manufactured by Rheometric Scientific, Inc.) by tensile mode under conditions of from -20 to 100 degree centigrade, initial load of 100 g, maximum strain of 0.01 %, and frequency of 0.2 Hz. A variation of Young's modulus between 0 and 80 degree centigrade was calculated. Results are together shown in Tables 1 and 2.

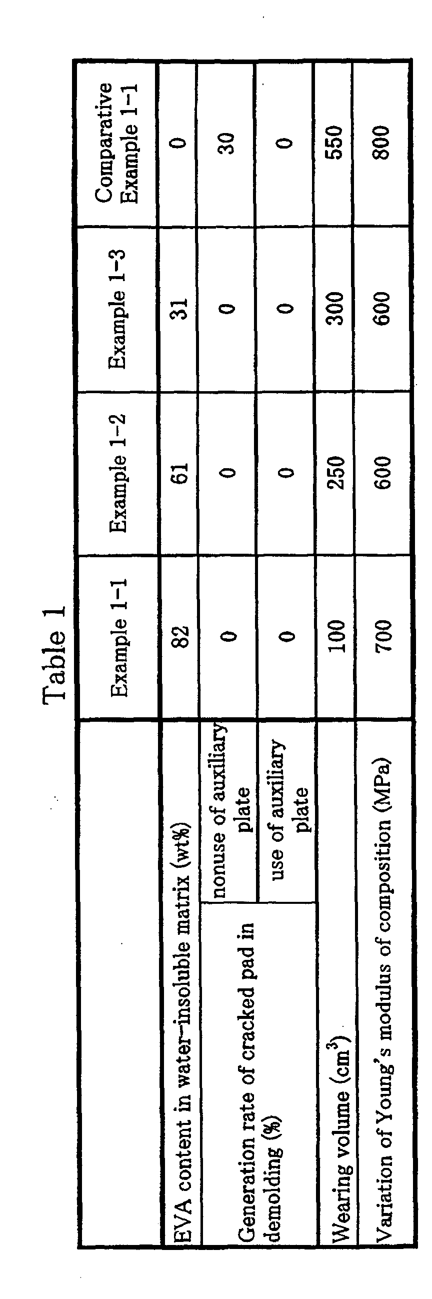

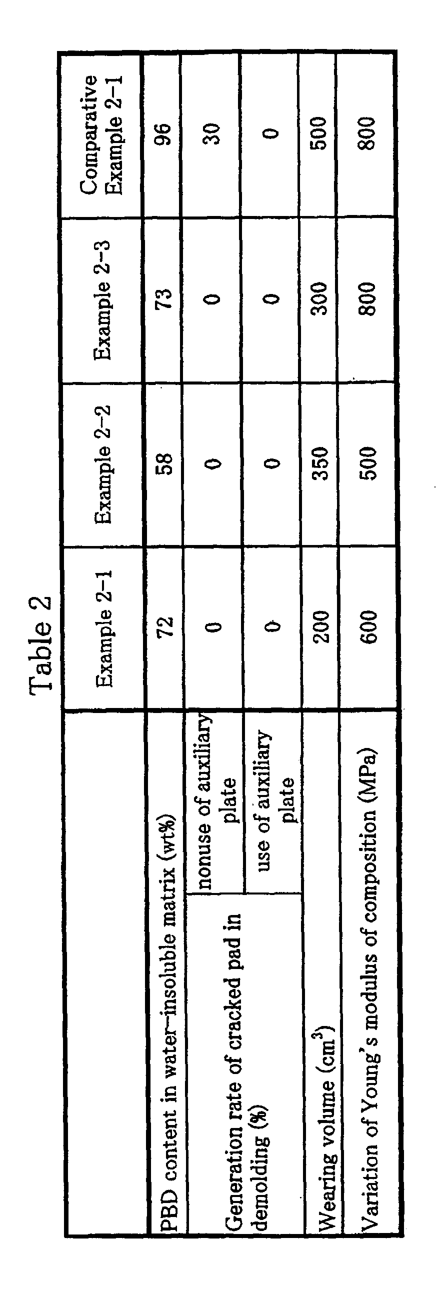

From results in Table 1, Comparative Example 1-1 where the water-insoluble matrix is obtained from only uncrosslinked PBD shows a probability of 30 % of cracking in demolding, and the use of an auxiliary plate was preferable. In addition, it is found that the variation of Young's modulus and wearing volume of the composition were larger than that of Examples.

On the other hand, all pads of Examples 1-1 to 1-3 that are inventive products were not cracked even when the auxiliary plate was not used in demolding. That is, formability is superior to Comparative Example 1-1. Further, it is found that the variation of Young's modulus were from 600 to 700 MPa and smaller by from 13 to 25 % in comparison with that of Comparative Example 1-1. Furthermore, wearing volumes were from 100 to 300 cm³ and smaller by from 45 to 82 % in comparison with that of Comparative Example 1-1. Accordingly, it is found that the polishing pads containing crosslinked EVA are excellent in formability, and have small variations of Young's modulus and less wearing volumes.

From results in Table 2, Comparative Example 2-1 where the water-insoluble matrix is obtained from only uncrosslinked PBD shows a probability of 30 % of cracking in demolding, and the use of an auxiliary plate was preferable. In addition, it is found that the variation of Young's modulus and wearing volume of the composition were larger than that of Examples.

On the other hand, all pads of Examples 2-1 to 2-3 that are inventive products were not cracked even when the auxiliary plate was not used in demolding. That is, formability is superior to Comparative Example 2-1. In addition, their variations of Young's modulus of were small of from 600 to 800 MPa. Particularly those of Examples 2-1 and 2-2 where crosslinked EVA is contained are smaller by from 25 to 38 % in comparison with that of Comparative Example 2-1. Furthermore, wearing volumes were from 200 to 350 cm³ and smaller by from 30 to 60 % in comparison with that of Comparative Example 1-1. Accordingly, it is found that the polishing pads containing crosslinked PBD and other crosslinked polymer are excellent in formability and abrasion resistance. And in case the other polymer is crosslinked EVA, the composition has a small variation of Young's modulus.

An objective of the present invention is to provide a composition for polishing pad that is excellent in formability, abrasion resistance and small in temperature dependence of Young's modulus and a polishing pad therewith. The composition for polishing pad of the present invention comprises a water-insoluble matrix and a water-soluble particle dispersed in the water-insoluble matrix. The water-insoluble matrix contains a crosslinked ethylene-vinyl acetate copolymer and/or a crosslinked 1,2-polybutadiene and each of these is contained by a prescribed amount against the total of the water-insoluble matrix,

## Claims

1. A composition for polishing pad comprising a water-insoluble matrix and a water-soluble particle dispersed in said water-insoluble matrix,
wherein said water-insoluble matrix contains a crosslinked ethylene-vinyl acetate copolymer and does not contain crosslinked 1,2-polybutadiene; and a content of said crosslinked ethylene-vinyl acetate copolymer is 10 % by weight or more based on 100 % by weight of the total of said water-insoluble matrix.

2. A composition for polishing pad obtained by subjecting a crosslinkable polymer composition comprising an uncrosslinked water-insoluble polymer and a water-soluble particle to a crosslinking treatment,
wherein said uncrosslinked water-insoluble polymer ,contains uncrosslinked ethylene-vinyl acetate copolymer and does not contain uncrosslinked 1,2-polybutadiene; a content of said uncrosslinked ethylene-vinyl acetate copolymer is 10 % by weight or more based on 100 % by weight of a material to be a water-insoluble matrix; and at least one part of said uncrosslinked ethylene-vinyl acetate copolymer is crosslinked by said crosslinking treatment.

3. A composition for polishing pad comprising a water-insoluble matrix and a water-soluble particle dispersed in said water-insoluble matrix,
wherein said water-insoluble matrix contains crosslinked 1,2-polybutadiene and other crosslinked polymer except for crosslinked ethylene-vinyl acetate copolymer; and a content of said crosslinked 1,2-polybutadiene is 10 % by weight or more based on 100 % by weight of the total of said water-insoluble matrix.

4. A composition for polishing pad obtained by subjecting a crosslinkable polymer composition comprising an uncrosslinked water-insoluble polymer and a water-soluble particle to a crosslinking treatment,
wherein said uncrosslinked water-insoluble polymer contains uncrosslinked 1,2-polybutadiene and other crosslinkable polymer except for uncrosslinked ethylene-vinyl acetate copolymer; a content of said uncrosslinked 1,2-polybutadiene is 10 % by weight or more based on 100 % by weight of the total of a material to be a water-insoluble matrix; and at least one part of said uncrosslinked 1,2-polybutadiene is crosslinked by said crosslinking treatment.

5. A composition for polishing pad comprising a water-insoluble matrix and a water-soluble particle dispersed in said water-insoluble matrix,
wherein said water-insoluble matrix contains crosslinked ethylene-vinyl acetate copolymer and crosslinked 1,2-polybutadiene; and a content of said crosslinked ethylene-vinyl acetate copolymer or said crosslinked 1,2-polybutadiene is 10 % by weight or more based on 100 % by weight of the total of said water-insoluble matrix.

6. The composition for polishing pad according to Claim 5, wherein a content of said crosslinked ethylene-vinyl acetate copolymer is 10 % by weight or more based on 100 % by weight of the total of said water-insoluble matrix; and a content of said crosslinked ethylene-vinyl acetate copolymer is exceeding 50 % by weight based on 100 % by weight of the total of said crosslinked 1,2-polybutadiene and said crosslinked ethylene-vinyl acetate copolymer.

7. The composition for polishing pad according to Claim 5, wherein a content of said crosslinked 1,2-polybutadiene is 10 % by weight or more based on 100 % by weight of the total of said water-insoluble matrix; and a content of said crosslinked 1,2-polybutadiene is 50 % by weight or more based on 100 % by weight of the total of said crosslinked 1,2-polybutadiene and said crosslinked ethylene-vinyl acetate copolymer.

8. A composition for polishing pad obtained by subjecting a crosslinkable polymer composition comprising an uncrosslinked water-insoluble polymer and a water-soluble particle to a crosslinking treatment,
wherein said uncrosslinked water-insoluble polymer contains uncrosslinked ethylene-vinyl acetate copolymer and uncrosslinked ethylene-vinyl acetate copolymer; a content of said uncrosslinked 1,2-polybutadiene or said uncrosslinked 1,2-polybutadiene is 10 % by weight or more based on 100 % by weight of the total of a material to be a water-insoluble matrix; and at least one part of said uncrosslinked ethylene-vinyl acetate copolymer and said uncrosslinked 1,2-polybutadiene is crosslinked by said crosslinking treatment.

9. The composition for polishing pad according to Claim 8, wherein a content of said uncrosslinked ethylene-vinyl acetate copolymer is 10 % by weight or more based on 100 % by weight of the total of said material to be a water-insoluble matrix; and a content of said uncrosslinked ethylene-vinyl acetate copolymer is exceeding 50 % by weight based on 100 % by weight of the total of said uncrosslinked 1,2-polybutadiene and said uncrosslinked ethylene-vinyl acetate copolymer.

10. The composition for polishing pad according to Claim 8, wherein a content of said uncrosslinked 1,2-polybutadiene is 10 % by weight or more based on 100 % by weight of the total of said material to be a water-insoluble matrix; and a content of said uncrosslinked 1,2-polybutadiene is 50 % by weight or more based on 100 % by weight of the total of said uncrosslinked 1,2-polybutadiene and said uncrosslinked ethylene-vinyl acetate copolymer.

11. The composition for polishing pad according to any one of Claims 1 to 10, wherein a variation of Young's modulus between 0 and 80 degree centigrade is 1000 MPa or less.

12. A polishing pad comprising a polishing part made of a composition for polishing pad set forth in any one of Claims 1 to 11.
